# EUROPEAN PATENT APPLICATION

(11) **EP 4 597 964 A1**
(43) Date of publication of application: **06.08.2025**
(21) Application number: 23871295.4
(22) Date of filing: 30.05.2023
(51) Int. Cl.: H04L 41/0668, H04W 84/18

(54) **COMMUNICATION DEVICE, COMMUNICATION CONTROL METHOD, AND COMMUNICATION SYSTEM**

(30) Priority: 29.09.2022 JP 2022156638
(71) Applicant: Panasonic Holdings Corporation, Osaka, 571-8501 (JP)
(72) Inventor: KOGA, Hisao, Osaka 571-0057 (JP); IKEZAKI, Issei, Osaka 571-0057 (JP)
(74) Representative: Eisenführ Speiser
(86) International application number: PCT/JP2023/020051
(87) International publication number: WO 2024/070049

(57) **Abstract**

A communication apparatus according to one exemplary embodiment of the present disclosure is a communication apparatus in a communication system in which multi-hop communication is performed, the communication apparatus including: a detector that detects that a base unit in the communication system is in a state in which communication is not possible; and a determiner that determines whether the communication apparatus becomes a proxy base unit, the determining being performed based on a position of the communication apparatus in a relay route in the communication system when the base unit is in the state in which communication is not possible.

## Description

### Technical Field

The present disclosure relates to a communication apparatus, a communication control method, and a communication system.

### Background Art

Conventionally, multi-hop communication in power line communication (PLC) is known (see, for example, Patent Literature (hereinafter, referred to as "PTL") 1). In this multi-hop communication, a communication network (hereinafter, also simply referred to as a network (NW)) including a plurality of communication terminals including a base unit and a slave unit relays a communication signal between the communication terminals to perform communication between a terminal and another terminal which cannot directly communicate with the terminal.

### Citation List

### Patent Literature

PTL 1
Japanese Patent Application Laid-Open No. 2020-036316

### Summary of Invention

In a multi-unit environment composed of one base unit and a plurality of slave units as in the above technology, it is necessary to reconstruct the network when the base unit leaves the network due to a failure, power outage, or other reasons. When reconstructing the network in this manner, it is necessary for one of the slave units to become the base unit. However, when a slave unit with a high hop count becomes a base unit (for example, when a slave unit which has been far away from the base unit until then becomes a base unit, such as a case where a slave unit at the 10th hop becomes the base unit), there is a possibility that, due to the constraint by the maximum hop count, some of the slave units that have entered the network at that time may not be able to enter a network to be reconstructed.

A non-limiting embodiment of the present disclosure contributes to providing a communication apparatus, a communication control method, and a communication system capable of appropriately reconstructing a communication network when a base unit leaves a communication network including a base unit and a slave unit.

A communication apparatus according to one exemplary embodiment of the present disclosure is a communication apparatus in a communication system in which multi-hop communication is performed, and includes: a detector that detects that a base unit in the communication system is in a state in which communication is not possible; and a determiner that determines whether the communication apparatus becomes a proxy base unit, the determining being performed based on a position of the communication apparatus in a relay route in the communication system when the base unit is in the state in which communication is not possible.

A communication control method according to one exemplary embodiment of the present disclosure is performed by a communication apparatus in a communication system in which multi-hop communication is performed, and includes: detecting that a base unit in the communication system is in a state in which communication is not possible; and determining whether the communication apparatus becomes a proxy base unit, the determining being based on a position of the communication apparatus in a relay route in the communication system when the base unit is in the state in which communication is not possible.

A communication system according to one exemplary embodiment of the present disclosure is a communication system in which multi-hop communication is performed, in which: a proxy base unit candidate is determined from among slave units based on a relay route in the communication system, the slave units constituting the communication system; a proxy base unit is determined from among a plurality of the proxy base unit candidates when a base unit in the communication system is in a state in which communication is not possible; and when the proxy base unit candidate becomes the proxy base unit, the proxy base unit candidate is capable of performing a relay to the slave units excluding the proxy base unit candidate within an allowable maximum hop count in a second relay route of a second communication system in which second multi-hop communication after the base unit is brought in the state in which communication is not possible is performed.

It should be noted that general or specific embodiments may be implemented as a system, an apparatus, a method, an integrated circuit, a computer program, a storage medium, or any selective combination thereof.

According to one exemplary embodiment of the present disclosure, it is possible to appropriately reconstruct a communication network when a base unit leaves a communication network constituted by a base unit and a slave unit.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary configuration of a communication system according to Embodiment 1 of the present disclosure;
FIG. 2 illustrates an exemplary hardware configuration of a node according to Embodiment 1 of the present disclosure;
FIG. 3 illustrates an exemplary functional configuration of a CPU of the node according to Embodiment 1 of the present disclosure;
FIG. 4A illustrates an example of a topology before and after a base unit failure according to Embodiment 1 of the present disclosure;
FIG. 4B illustrates an example of a topology before and after a base unit failure in a comparative example;
FIG. 5A illustrates an example of a topology and an example of a link cost before a base unit failure according to Embodiment 1 of the present disclosure;
FIG. 5B illustrates an example of self-node information and adjacent node information before a base unit failure according to Embodiment 1 of the present disclosure;
FIG. 6A is a flowchart illustrating an example of a process in which a slave unit becomes a proxy base unit according to Embodiment 1 of the present disclosure;
FIG. 6B is a flowchart illustrating an example of step S601 in FIG. 6A;
FIG. 7 illustrates an example of a topology before and after a failure of a slave unit according to Embodiment 1 of the present disclosure;
FIG. 8A is a flowchart illustrating an example of processing in which another slave unit becomes a proxy base unit when the slave unit leaves from the network according to Embodiment 1 of the present disclosure;
FIG. 8B is a flowchart illustrating an example of a process in which the proxy base unit becomes a slave unit again according to Embodiment 1 of the present disclosure;
FIG. 9 illustrates an example of a topology before and after a base unit failure according to Embodiment 2 of the present disclosure;
FIG. 10 is a flowchart illustrating an example of a process in which a slave unit becomes a proxy base unit according to Embodiment 2 of the present disclosure;
FIG. 11A is a flowchart illustrating an example of a process in which a base unit determines a standby time according to Embodiment 2 of the present disclosure; and
FIG. 11B is a flowchart illustrating an example of a process in which a slave unit determines a standby time according to Embodiment 2 of the present disclosure.

### Description of Embodiments

Hereinafter, embodiments of the present disclosure will be described in detail with appropriate reference to the drawings. However, more detailed description than necessary may be omitted. For example, detailed descriptions of well-known matters and redundant descriptions of substantially the same configuration may be omitted. This is to avoid unnecessary redundancy of the following description and to facilitate understanding by a person skilled in the art.

It is to be noted that the accompanying drawings and the following description are provided to enable those skilled in the art to fully understand this disclosure, and are not intended to limit the claimed subject.

### (Embodiment 1)

### <Configuration of Communication System>

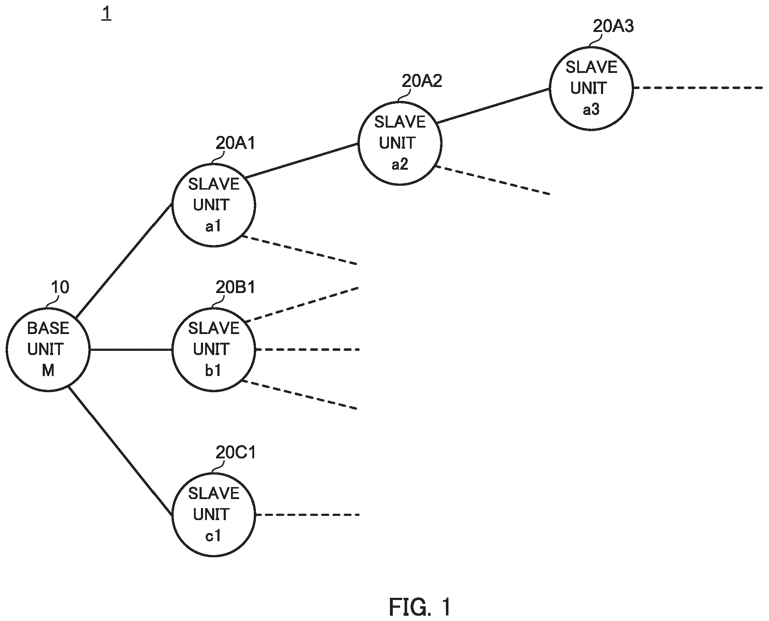

FIG. 1 illustrates an exemplary configuration of communication system 1 according to Embodiment 1 of the present disclosure.

As illustrated in FIG. 1, communication system 1 includes base unit M 10, slave unit a1 20A1, slave unit a2 20A2, slave unit a3 20A3, ..., slave unit b1 20B1, ..., and slave unit c1 20C1, .... Here, the alphanumeric characters (M, a1, b1, c1, etc.) provided after "base unit" and "slave unit" mean identification information (which may be referred to as an identifier, an identification number, an ID, or the like) of the base unit and the slave unit. The identification information of the base unit and the slave unit is indicated using one or two alphanumeric characters for simplicity and clarity, but in practice, it may be a serial number (manufacturing number), a medium access control (MAC) address, or another unique random string. Note that the number of and the connection form of slave units 20 that constitute communication system 1 (communication network) are not limited to those illustrated. Hereinafter, when each slave unit is not distinguished, the slave unit will be referred to as slave unit 20.

Communication system 1 may be disposed, for example, underwater (for example, in the sea). In a case where communication system 1 is disposed in this manner, for example, a control apparatus (not illustrated) may be connected to base unit M 10, and electronic equipment such as a sensor (not illustrated) controlled by the control apparatus may be connected to each slave unit 20. Alternatively, communication system 1 may be used in a facility such as a factory or an office building, for example. In a case where communication system 1 is disposed in this manner, a control apparatus (not illustrated) may be connected to base unit M 10, and electronic equipment (not illustrated) such as sensors, lighting fixtures, air conditioning apparatuses, and the like, which are controlled by the control apparatus, may be connected to each slave unit 20. Note that, some of slave units 20 do not have to have electronic equipment connected thereto, and slave units 20 to which electronic equipment are not connected may function as repeaters.

Note that, these base unit M 10 and slave unit 20 may be collectively referred to as "communication node" or simply "node" 100, "communication equipment" or simply "equipment" 100, "communication apparatus" or simply "apparatus" 100, "communication terminal" or simply "terminal" 100, and the like, and the base unit may be referred to as a root, a base unit, and the like.

In communication system 1, each node 100 (each of base unit M 10 and slave unit 20) performs multi-hop communication using PLC that utilizes a power line as a communication line and superimposes a signal on the power line.

For example, in FIG. 1, the hop count (from base unit M 10) of slave unit a1 20A1, slave unit b1 20B 1, and slave unit c1 20C1 is 1, the hop count (from base unit M 10) of slave unit a2 20A2 is 2, and the hop count (from base unit M 10) of slave unit a3 20A3 is 3. Note that, in Embodiment 1 and other embodiments, the maximum hop count is 10, and the maximum number of nodes connectable to communication system 1 is 1024, but the maximum hop count and the maximum number of nodes are not limited to these values.

In communication system 1, base unit M 10 collects predetermined information from slave unit 20 and performs remote monitoring or remote control on slave unit M 10. Here, communication is performed directly or indirectly between base unit M 10 and each slave unit 20, and slave unit 20 that cannot directly communicate with base unit M 10 performs indirect communication with base unit M 10 by sequentially relaying a communication signal to another slave unit 20 that can directly communicate with base unit M 10.

Each node 100 (each of base unit M 10 and slave unit 20) calculates a link cost indicating the communication quality (which may be referred to as link quality) with another node as described below, and communicates with another node based on the link cost (for example, in a route in which the link cost is the best (minimum)).

Note that a communication method in communication system 1 is not limited to PLC, which is a wired communication method, and may be a wired communication method other than PLC or a wireless communication method as long as multi-hop communication is possible.

Hereinafter, a technology will be described in which, when a node (for example, base unit M 10) that was originally configured to function (operate) as a base unit leaves a multi-hop communication network (for example, a hierarchical or tree network) configured in communication system 1 due to a failure or the like, any of the slave units (slave nodes) in communication system 1 functions as a base unit. Note that the expression "a node such as base unit M 10 leaves from the communication network" may be read as "a node such as base unit M 10 is brought in a state of being unable to communicate, in a state of being incapable of communicating, or in a state in which communication is disabled."

Hereinafter, a node that was originally configured to function as a base unit will be referred to as an original base unit, and a (slave) node that has come to function as a parent node will be referred to as a proxy base unit. As will be described later, even when the slave unit leaves the network due to a failure or the like, it may be preferable for another slave unit to function as the base unit (in this case, the original base unit and the proxy base unit coexist). Hereinafter, such another slave unit will also be referred to as a proxy base unit.

### <Node Configuration>

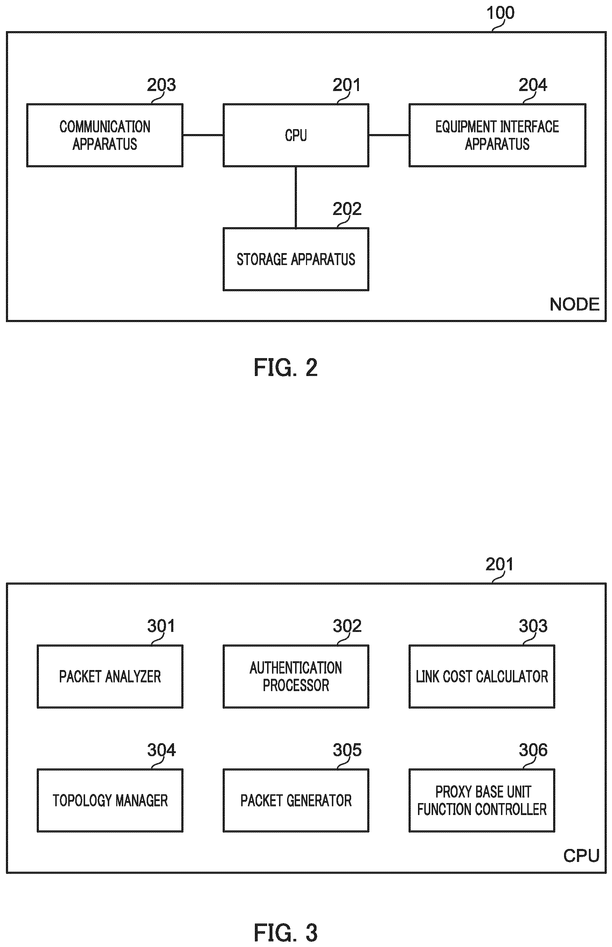

FIG. 2 illustrates an exemplary hardware configuration of node 100 according to Embodiment 1.

As illustrated in FIG. 2, node 100 includes central processing unit (CPU) 201, storage apparatus 202, communication apparatus 203, and equipment interface apparatus 204. Node 100 may include components other than those described above.

CPU 201 controls the overall operation of node 100 (for example, processing by various components such as communication by communication apparatus 203). CPU 201 realizes various functions (including the processing described later) of node 100 by, for example, loading a predetermined program stored in a hard disk drive (HDD), a solid state drive (SSD), or the like included in storage apparatus 202 into a random access memory (RAM) or the like included in storage apparatus 202 and executing the program. The program executed by CPU 201 may be stored in advance in storage apparatus 202, or may be provided through an electrical communication line such as the Internet or stored in a non-transitory storage medium such as a memory card.

Storage apparatus 202 is a non-transitory storage medium, and includes a non-volatile memory such as an HDD, an SSD, or a read only memory (ROM), an electrically rewritable non-volatile memory such as an electrically erasable programmable read only memory (EEPROM), a volatile memory such as a RAM, and the like. Storage apparatus 202 stores information on a communication route, topology information, a communicable node (for example, another node which can be directly communicated), and the like (for example, in a table format). Storage apparatus 202 also stores a program such as a control program for operating node 100, data necessary for executing this program, identification information of node 100, and other information/data processed (processed) by node 100 (for example, CPU 201).

In a case where node 100 is base unit M 10, storage apparatus 202 stores, for example, a communication route data table for registering all communication routes between nodes constructed in the network, a topology table for recording information (link information) on adjacent nodes with which each node can directly communicate, and the like.

Further, when node 100 is slave unit 20, a communicable node data table or the like, which represents, for example, an adjacent node (base unit M 10 or another slave unit 20) with which node 100 is capable of communicating, a communication cost value (link cost) indicating a communication quality between node 100 and the adjacent node (base unit M 10 or another slave unit 20), and a communication cost value indicating a communication quality between node 100 and base unit M 10 via the adjacent node, is stored in storage apparatus 202. By holding such a table, slave unit 20 can grasp the route to base unit M 10.

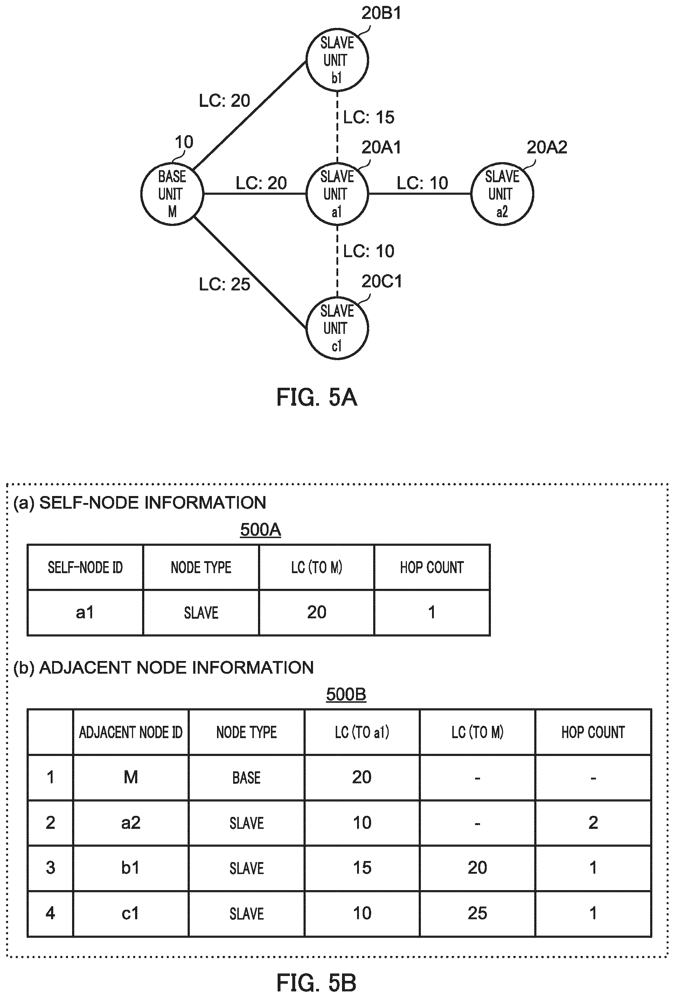

FIG. 5B illustrates a specific example of data/information stored in a table format, which will be described later.

Information on a communication route, topology information, a communicable node (for example, another node capable of direct communication), and the like, including the information illustrated in FIG. 5B, is an example of information on a relay route according to the present disclosure.

Communication apparatus 203 is a communication interface apparatus for communicating with another node 100. Communication apparatus 203 may be a communication interface apparatus for PLC. Note that, when a wired communication method other than PLC or a wireless communication method is used as the communication method, communication apparatus 203 may be a communication interface apparatus corresponding to the wired communication method or the wireless communication method. Communication apparatus 203 is an example of a receiver according to the present disclosure.

Equipment interface apparatus 204 is an interface apparatus for exchanging (inputting and outputting) data with a control apparatus or electronic equipment connected to node 100. Equipment interface apparatus 204 may be, for example, a communication interface apparatus that conforms to the Ethernet (registered trademark) standard.

FIG. 3 illustrates an exemplary functional configuration of CPU 201 according to Embodiment 1.

CPU 201 includes packet analyzer 301, authentication processor 302, link cost calculator 303, topology manager 304, packet generator 305, and proxy base unit function controller 306.

A Hello packet (H packet) (also referred to as hello message or hello signal), an authentication packet, and a normal packet are input to CPU 201. Before the authentication processing performed in communication system 1 (communication network), the H packet is broadcasted from one node to the node to which the one node is currently connected. Further, in addition to this, the H packet is periodically transmitted or broadcasted to an adjacent node by each node in order to update the route information (such an H packet may be referred to as a periodic signal). The H packet may mean a packet that indicates the presence of each current node itself (which is also referred to as "self-node"). For example, the H packet includes identification information of a base unit in the network, information on the transmission source of the H packet, information on an adjacent node to the self-node, information on the communication quality of a link, and the like. The authentication packet is a packet that is transmitted and received during the authentication processing, and the normal packet may be, for example, sensor data acquired by a sensor or the like.

Packet analyzer 301 analyzes the data structure of various packets (H packet, authentication packet, and normal packet) that are input, determines the types of the packets, and assigns the transfer destinations of the packets based on the determination result. Packet analyzer 301 outputs the H packet to link cost calculator 303 when, for example, the input packet is determined to be the H packet. Packet analyzer 301 outputs the authentication packet to authentication processor 302 when, for example, the input packet is determined to be an authentication packet. Packet analyzer 301 outputs the normal packet to topology manager 304 when, for example, the input packet is determined to be the normal packet.

In a case where node 100 is slave unit 20, packet analyzer 301 of slave unit 20 further operates as follows. Packet analyzer 301 detects whether base unit M 10 has left the network based on whether no H packet has been received from base unit M 10 for a predetermined time. For example, when packet analyzer 301 has not received any H packet for a predetermined time from base unit M 10, packet analyzer 301 detects that base unit M 10 has left the network. Packet analyzer 301 then outputs information indicating that base unit M 10 has left the network to proxy base unit function controller 306.

In a case where node 100 is a proxy base unit, packet analyzer 301 of the proxy base unit further operates as follows. Packet analyzer 301 detects whether original base unit M 10 is in a state in which it is capable of communication, based on whether the H packet is received from original base unit M 10. For example, when packet analyzer 301 receives the H packet from original base unit M 10, packet analyzer 301 detects that original base unit M 10 has entered the state in which it is capable of communication. Packet analyzer 301 then outputs, to proxy base unit function controller 306, information indicating that original base unit M 10 has entered the state in which it is capable of communication.

Packet analyzer 301 is an example of a detector according to the present disclosure.

Authentication processor 302 executes, using the authentication packet inputted from packet analyzer 301, authentication processing with a node that is a transmission source of the authentication packet. Authentication processor 302 outputs the authentication packet, which is a packet generated during the authentication processing, or a response to the authentication packet transmitted from another node, to topology manager 304.

Link cost calculator 303 calculates a link cost indicating the reception quality of an H packet received by the node from a transmitter node using the H packet inputted from packet analyzer 301. Link cost calculator 303 writes (stores) a calculation result of the link cost into the data structure of the H packet. Further, the H packet also stores a value of each link cost when the H packet is transmitted from base unit M 10. Link cost calculator 303 outputs the H packet storing the calculation result of the link cost to topology manager 304.

Topology manager 304 manages (acquires) topology information indicating a topology (that is, nodes constituting communication system 1 and their connection forms) generated by base unit M 10, and assigns and outputs the output destinations (for example, packet generator 305) of various packets based on the topology information. The topology information is stored in topology manager 304 or storage apparatus 202 of each node. Further, topology manager 304 stores not only the topology information but also information on the communication routes described above, communicable nodes (for example, other nodes capable of direct communication, adjacent nodes illustrated in FIG. 5B, and the like), the self-node, and the like in topology manager 304 or storage apparatus 202. Note that, topology manager 304 of base unit M 10 generates (forms) a topology based on each link cost calculated by link cost calculator 303 of base unit M 10 in accordance with the H packet transmitted from each of one or more nodes that are targets of the authentication processing, and provides topology information indicating the topology to other nodes.

Topology manager 304 is an example of a determiner according to the present disclosure.

Packet generator 305 generates and outputs a packet for data communication with another node to be a transmission destination, an H packet, and the like based on the authentication packet or the normal packet inputted from topology manager 304.

Proxy base unit function controller 306 performs control related to determining whether or not slave unit 20 becomes a proxy base unit, such as determining whether or not slave unit 20 becomes a proxy base unit based on the position of slave unit 20 in the relay route of communication system 1. Proxy base unit function controller 306 performs control different among base unit M 10, slave unit 20, and the proxy base unit.

In a case where slave unit 20 determines, based on the determination of the self-node, that the self-node becomes the proxy base unit, and when proxy base unit function controller 306 of slave unit 20 receives from packet analyzer 301 information indicating that base unit M 10 has left the network, proxy base unit function controller 306 of slave unit 20 determines whether the self-node becomes the proxy base unit based on the self-node information and the adjacent node information. For example, proxy base unit function controller 306 of slave unit 20 determines whether the self-node becomes a proxy base unit by determining, based on the self-node information and the adjacent node information as described below, whether a predetermined condition is satisfied. Further, when the self-node is determined to be the proxy base unit, proxy base unit function controller 306 of slave unit 20 restarts the self-node as the proxy base unit.

On the other hand, when slave unit 20 determines, based on an instruction (indication) from base unit M 10, that the self-node becomes the proxy base unit, proxy base unit function controller 306 of base unit M 10 determines in advance slave unit 20 which becomes the proxy base unit when base unit M 10 leaves the network, based on topology information including adjacent node information. Then, when base unit M 10 leaves the network, proxy base unit function controller 306 of base unit M 10 transmits (indicates), to slave unit 20 which becomes the proxy base unit, a message (instruction) indicating that slave unit 20 which becomes the proxy base unit is to become the proxy base unit. Accordingly, slave unit 20 that has not received such an indication does not become a proxy base unit. In a case where proxy base unit function controller 306 of slave unit 20 that has received such an indication determines that the self-node is to become the proxy base unit (when base unit M 10 is detected to have left the network), the self-node is restarted as the proxy base unit.

In a case where proxy base unit function controller 306 of the proxy base unit that has been restarted as described above operates as a slave unit again (for example, when information indicating that original base unit M 10 has brought in a state in which it is capable of communication is received from packet analyzer 301), proxy base unit function controller 306 restarts the self-node as a slave unit.

Proxy base unit function controller 306 is an example of a determiner according to the present disclosure.

### <Operation of Communication System>

Next, a common operation of node 100 will be described.

### [Authentication Processing]

An example of a processing procedure for an authentication processing performed between nodes (an authentication processing performed between base unit M 10 and slave unit 20) will be described. This authentication processing is mainly executed by each authentication processor 302. As a premise, base unit M 10 transmits an H packet to slave unit 20, and slave unit 20 receives the H packet transmitted from base unit M 10.

Slave unit 20 issues an authentication packet including an entry request frame to the base unit (base unit M 10) of the network into which slave unit 20 intends to enter, and transmits the authentication packet to base unit M 10. When base unit M 10 receives the authentication packet transmitted from slave unit 20, base unit M 10 sets a predetermined text string, generates an authentication packet, and transmits the authentication packet to requesting slave unit 20 (slave unit 20 that issued the authentication packet).

Subsequently, slave unit 20 encodes the authentication packet including the predetermined text string transmitted from base unit M 10 by using a unique key that slave unit 20 holds in advance in storage apparatus 202 or the like, and the authentication packet including a text string that is an encoded output is generated and transmitted to base unit M 10.

When base unit M 10 receives the authentication packet transmitted from slave unit 20, base unit M 10 decodes the text string, which is the encoded output included in the authentication packet, using the unique key that is set in advance and stored in storage apparatus 202 or the like. Further, base unit M 10 determines whether the text string, which is the decoded output, matches a predetermined text string set as described above. In a case where base unit M 10 determines that the text string, which is the decoded output, matches the predetermined text string (when base unit M 10 determines to permit participation in the network), base unit M 10 encodes a network key specific to the network with a unique key and transmits the encoded network key to slave unit 20.

Slave unit 20 decodes the encoded network key transmitted from base unit M 10 using the unique key to acquire the network key. By acquiring this network key, slave unit 20 is officially authenticated as a data communication destination for base unit M 10. In data communication within the network, slave unit 20 performs data communication by encoding or decoding using a network key.

Note that the authentication processing is, for example, processing based on a 4-way handshake defined in the high definition power line communication (HD-PLC) standard, but the authentication processing may be processing based on another system other than the above-described standard. For example, the authentication processing may be based on a system such as gigabit home networking (G.hn), which is a unified standard for wired highspeed network communication technology, or home plug power line alliance (Home Plug), which is an industry group for power line carrier communication.

### [Topology Generation (Multi-Hop Formation) Processing and Multi-Hop Transmission]

Next, topology generation and multi-hop transmission between base unit M 10 and slave unit 20 will be described.

Base unit M 10 broadcasts the H packet to all nodes simultaneously. It is assumed that only slave unit 20 can receive the H packet in response to this broadcast transmission. Then, the authentication processing described above is performed between base unit M 10 and slave unit 20. Thus, power transfer and data communication between base unit M 10 and slave unit 20 becomes possible.

Next, this slave unit 20 broadcasts the H packet to other nodes simultaneously. If there is a node that can receive the H packet in response to this broadcast transmission, the authentication processing described above is performed between the node and base unit M 10 via slave unit 20. As a result, data communication between the node and base unit M 10 via slave unit 20 becomes possible, and power transfer between slave unit 20 and the node becomes possible. The same processing is performed for the node.

### [Operation Relating to Proxy Base Unit Function]

Hereinafter, an operation performed when slave unit 20 becomes a proxy base unit in a case where base unit M 10 fails or the like will be described.

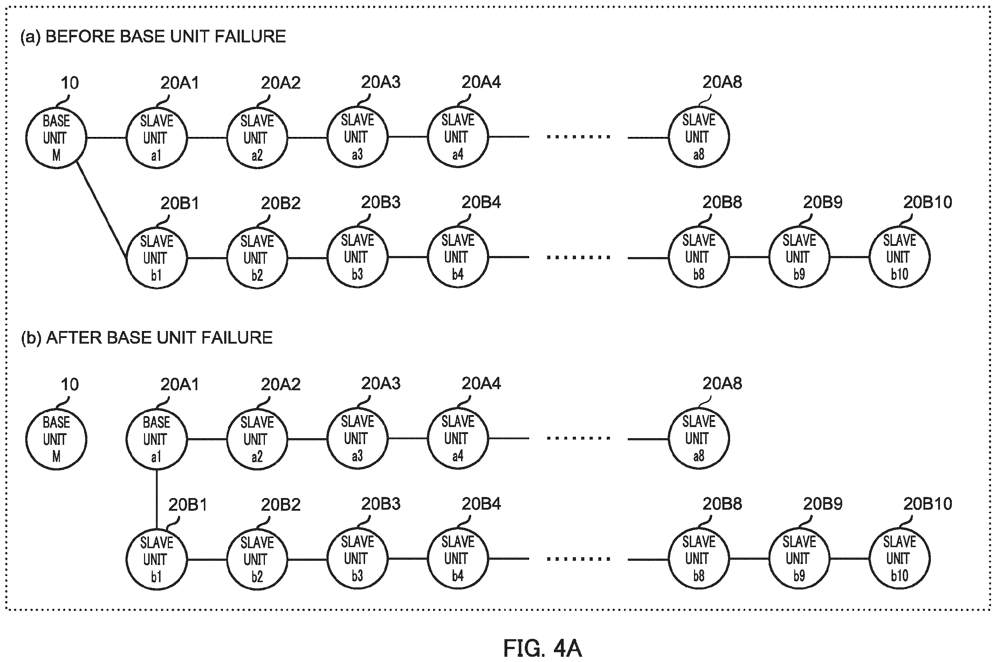

FIG. 4A illustrates an example of the topology before and after a base unit failure according to Embodiment 1.

Before base unit M 10 fails, as an example, as illustrated in (a) of FIG. 4A, slave unit a1 20A1 and slave unit b1 20B1 are connected to the downstream side of base unit M 10. Further, slave unit a2 20A2 is connected to the downstream side of slave unit a1 20A1, slave unit a3 20A3 is connected to the downstream side of slave unit a2 20A2, and similarly, slave unit a8 20A8 is connected to the downstream side of slave unit a7 20A7. Further, slave unit b2 20B2 is connected to the downstream side of slave unit b1 20B 1, slave unit b3 20B3 is connected to the downstream side of slave unit b2 20B2, and similarly, slave unit b10 20B10 is connected to the downstream side of slave unit b9 20B9.

After base unit M 10 fails, as an example, slave unit a1 20A1, which was originally present in the first hop, becomes the proxy base unit as shown in (b) of FIG. 4A. Then, slave unit b1 20B1 is connected to the downstream side of proxy base unit a1 20A1. The connection on the downstream side of slave unit a2 20A2 and the downstream side of slave unit b1 20B 1 is not changed. Further, instead of slave unit a1 20A1, slave unit b1 20B1 may become the proxy base unit. As described above, by making the slave unit that was originally present in the first hop the proxy base unit, all nodes can join the new network without being constrained by the maximum hop count.

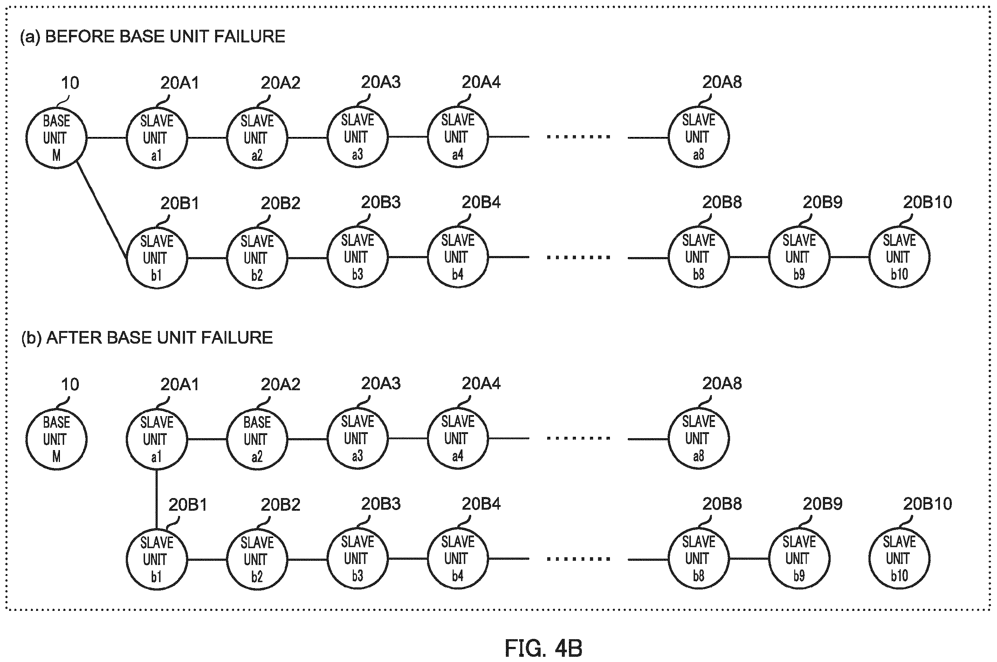

FIG. 4B illustrates an example of the topology before and after a base unit failure in a comparative example.

Before base unit M 10 fails, as an example, base unit M 10 and slave unit 20 are connected in the same manner as in (a) of FIG. 4A, as illustrated in FIG. 4B.

Unlike the embodiment, after base unit M 10 fails, the slave unit that becomes the proxy base unit is randomly selected, rather than the slave unit that was originally present in the first hop becoming the proxy base unit. Accordingly, as an example, as illustrated in (b) of FIG. 4B, slave unit a2 20A2, which was originally present in the second hop, may become the proxy base unit. In this case, slave unit a1 20A1 is connected to the downstream side of proxy base unit a2 20A2, and slave unit b1 20B 1 is connected to the downstream side of slave unit a1 20A1. The connection on the downstream side of slave unit a3 20A3 and the downstream side of slave unit b1 20B1 is not changed. Accordingly, in this case, slave unit b10 20B10 is constrained by the maximum hop count and cannot enter the network.

Next, specific processing when slave unit 20 originally present in the first hop becomes the proxy base unit will be described.

FIG. 5A illustrates an example of a topology and an example of a link cost before a base unit failure according to Embodiment 1, and FIG. 5B illustrates an example of self-node information and adjacent node information before a base unit failure according to Embodiment 1.

In a case where base unit M 10 is not faulty, for example, as illustrated in FIG. 5A, the link cost (LC) between base unit M 10 and slave unit a1 20A1 is 20, the LC between base unit M 10 and slave unit b1 20B 1 is 20, and the LC between base unit M 10 and slave unit c1 20C1 is 25. Further, when base unit M 10 is not faulty, for example, as illustrated in FIG. 5A, the LC between slave unit a1 20A1 and slave unit b1 20B1 is 15, the LC between slave unit a1 20A1 and slave unit c1 20C1 is 10, and the LC between slave unit a1 20A1 and slave unit a2 20A2 is 10.

Each slave node stores the self-node information and the adjacent node information described above in storage apparatus 202 or topology manager 304 of the self-node in preparation for the case where the base unit leaves the network. This is illustrated in FIG. 5B.

As illustrated in (a) of FIG.5B, slave unit a1 20A1 stores, as an example, self-node information 500A. Self-node information 500A includes a self-node ID indicating identification information of the self-node, a node type indicating whether the self-node is a base unit or a slave unit, LC indicating the communication quality (the communication quality between the base unit and the self-node) of the self-node to the base unit (for example, base unit M 10), and the hop count of the self-node (from the base unit). For example, self-node information 500A corresponds to the information illustrated in FIG. 5A, and indicates that the self-node ID is a1, the type of the self-node is a slave unit, the LC of the self-node to base unit M 10 is 20, and the hop count of the self-node is 1.

Further, as illustrated in (b) of FIG. 5B, slave unit a1 20A1 stores, as an example, adjacent node information 500B. Adjacent node information 500B includes information on a node adjacent to slave unit a1 20A1 as a record. Adjacent node information 500B includes, for example, four records of base unit M 10, slave unit b1 20B1, slave unit c1 20C1, and slave unit a2 20A2, which are adjacent nodes, corresponding to the information illustrated in FIG. 5A. Further, adjacent node information 500B includes, for each adjacent node, an adjacent node ID indicating identification information of the adjacent node, a node type indicating whether the adjacent node is a base unit or a slave unit, an LC indicating a communication quality of the adjacent node to the self-node (a communication quality between the self-node and the adjacent node), an LC indicating a communication quality (a communication quality between the base unit and the adjacent node) of the adjacent node to the base unit (for example, base unit M 10), and a hop count of the adjacent node (from the base unit). For example, the table in (b) of FIG. 5B shows the values illustrated in FIG. 5A. Note that, information in the fifth column from the left and the sixth column from the left does not exist in the record of base unit M 10 (base unit). Further, the information in the fifth column from the left does not exist in the record of slave unit a2 20A2 (slave unit of the self-node).

Each node can acquire or calculate the values shown in the tables in (a) and (b) of FIG. 5B by exchanging H packets between nodes, and can store the values in, for example, storage apparatus 202 of the self-node. Each slave unit 20 can determine whether the self-node becomes a proxy base unit by referring to such self-node information and adjacent node information when base unit M 10 leaves the network.

Specifically, in order for slave unit 20 to become a proxy base unit, the following conditions need to be satisfied.

The first condition is that the hop count is 1.

The second condition is that the communication quality to base unit M 10 is the best (for example, the LC to base unit M 10 is the minimum) when a plurality of slave units 20 with a hop count of 1 are present. Note that each slave unit 20 can grasp the communication quality (LC) of another slave unit 20 in the first hop from the H packet that base unit M 10 periodically transmits.

The third condition is that, when a plurality of slave units 20 with a hop count of 1 are present and a plurality of slave units 20 with the best communication quality to base unit M 10 are present, the node is a node that transmits a signal indicating that the node becomes a proxy base unit to another slave unit 20 with a hop count of 1 after waiting during a random time based on a random number (hereinafter, also referred to as a standby time or a waiting time) (a node that does not received, from another slave unit 20 with a hop count of 1, a signal indicating that the other slave unit 20 with a hop count of 1 becomes a proxy base unit during the random time waiting (before transmitting the above-described signal)).

For example, in the example illustrated in FIGS. 5A and 5B, there are slave unit a1 20A1, slave unit b1 20B1, and slave unit c1 20C1, each having a hop count of 1. Next, the nodes among these slave units that have the best communication quality with base unit M 10 are slave unit a1 20A1 and slave unit b1 20B1 (LC = 20). Accordingly, any of slave unit a1 20A1 and slave unit b1 20B 1 becomes the proxy base unit.

Alternatively, base unit M 10 may refer to a communication route data table, a topology table, and the like stored in storage apparatus 202 or topology manager 304, and may determine, based on the link quality (LC) and the like between base unit M 10 and first-hop slave unit 20 (adjacent node 20) in accordance with the above, slave unit 20 to be the proxy base unit, and may periodically (transmit) indicate the determination to the slave unit. For example, base unit M 10 may determine first-hop slave unit 20 having the best (minimum) LC as the proxy base unit. Further, for example, when a plurality of first-hop slave units 20 each having the best (minimum) LC are present, base unit M 10 may randomly determine one slave unit 20 from the plurality of slave units 20 as the proxy base unit, or may determine one slave unit 20 as the proxy base unit based on some criterion (for example, communication performance). Note that the periodic transmission (indication) from base unit M 10 to slave unit 20, which becomes the proxy base unit, may be performed using an H packet or may be performed using a dedicated message. Such an H packet and a dedicated message may be referred to as a periodic signal.

The above processing may be performed by proxy base unit function controllers 306 of slave unit 20 and base unit M 10.

Note that, when a plurality of nodes are activated as a base unit or a proxy base unit, the following processing may be performed so that one node functions as a base unit or a proxy base unit.

**In** a case where original base unit M 10 recovers from a failure or the like and becomes capable of communication, the proxy base unit that has received the H packet from original base unit M 10 restarts as a slave unit.

Further, when a plurality of slave units 20 are restarted as the proxy base unit, those proxy base unit which have received the H packet from another proxy base unit and have detected the other proxy base unit are restarted as slave units.

Note that the self-node information and the adjacent node information illustrated in FIG. 5B may be integrated into the same table.

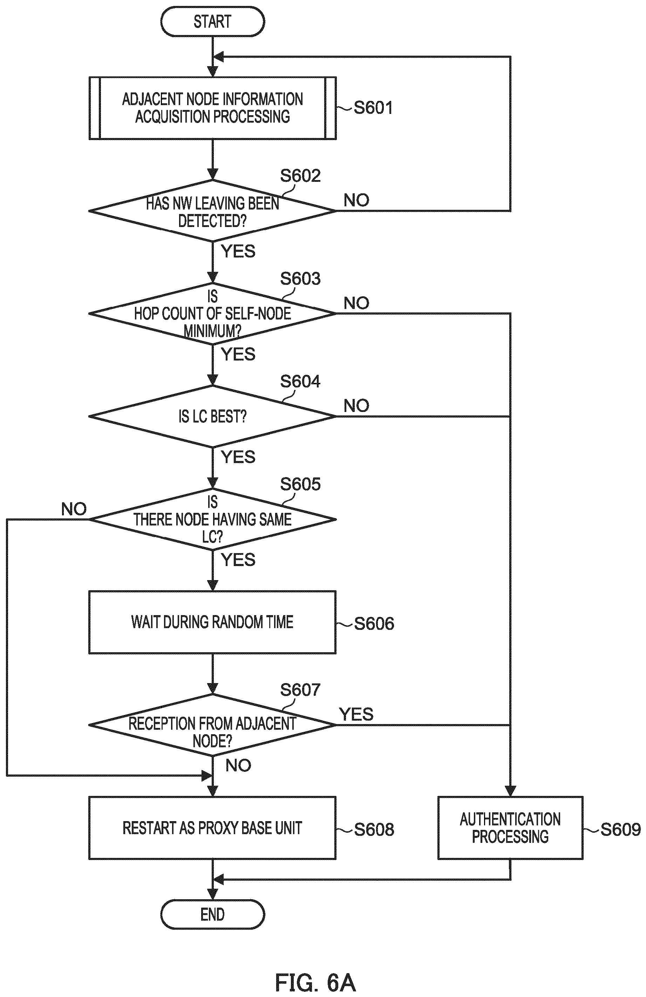

FIG. 6A is a flowchart illustrating an example of a process in which slave unit 20 becomes a proxy base unit according to Embodiment 1. Note that, it is assumed that the authentication between slave units 20 and base unit M 10 has been completed.

In step S601, slave unit 20 executes the adjacent node information acquisition processing. An example of step S601 will be described later.

In step S602, for example, based on whether no H packet from base unit M 10 as the transmission source has been received for a predetermined time, slave unit 20 (packet analyzer 301) detects whether base unit M 10 has left the network.

In a case where base unit M 10 has not left the network (step S602; NO), the flow returns to step S601.

In a case where base unit M 10 leaves the network (step S602; YES), in step S603, slave unit 20 (proxy base unit function controller 306) refers to the self-node information and the adjacent node information illustrated in FIG. 5B, and determines whether the hop count of the self-node is the minimum hop count (that is, 1).

In a case where the hop count of the self-node is not the minimum hop count (step S603; NO), in step S609, slave unit 20 (authentication processor 302) executes the authentication processing with a proxy base unit that another slave unit 20 has become by restart (or the slave unit waits to be authenticated with any base unit), and the flow ends.

In a case where the hop count of the self-node is the minimum hop count (step S603; YES), slave unit 20 (proxy base unit function controller 306) refers to the self-node information and the adjacent node information illustrated in FIG. 5B to determine whether the LC between an upper node (that is, base unit M 10) and the self-node is the best (minimum) in step S604.

In a case where the LC between the upper node and the self-node is not the best (step S604; NO), slave unit 20 (authentication processor 302) executes the authentication processing with the proxy base unit that another slave unit 20 has become by restart (or the slave unit waits to be authenticated with any base unit) in step S609, and the flow ends.

On the other hand, when the LC between the upper node and the self-node is the best (step S604; YES), slave unit 20 (proxy base unit function controller 306) refers to the self-node information and the adjacent node information illustrated in FIG. 5B, and determines whether there is an adjacent node having an LC between the adjacent node and the upper node, which is the same as the LC between the upper node and the self-node in step S605.

In a case where there is no adjacent node having an LC between the adjacent node and the upper node that is the same as the LC between the upper node and the self-node (step S605; NO), the flow proceeds to step S608 described below.

In a case where there is an adjacent node having an LC between the adjacent node and the upper node, which is the same as the LC between the upper node and the self-node (step S605; YES), slave unit 20 waits during a random time (the standby time determined by proxy base unit function controller 306) in step S606.

Next, in step S607, slave unit 20 (packet analyzer 301) determines whether a signal (H packet) indicating that the adjacent node will become a proxy base unit is received from the adjacent node.

In a case where the H packet is received from the adjacent node (step S607; YES), slave unit 20 (authentication processor 302) executes the authentication processing with the proxy base unit (or waits to be authenticated with any base unit) in step S609, and the flow ends.

In a case where the H packet is not received from the adjacent node (step S607; NO), slave unit 20 restarts as a proxy base unit in step S608, and the flow ends.

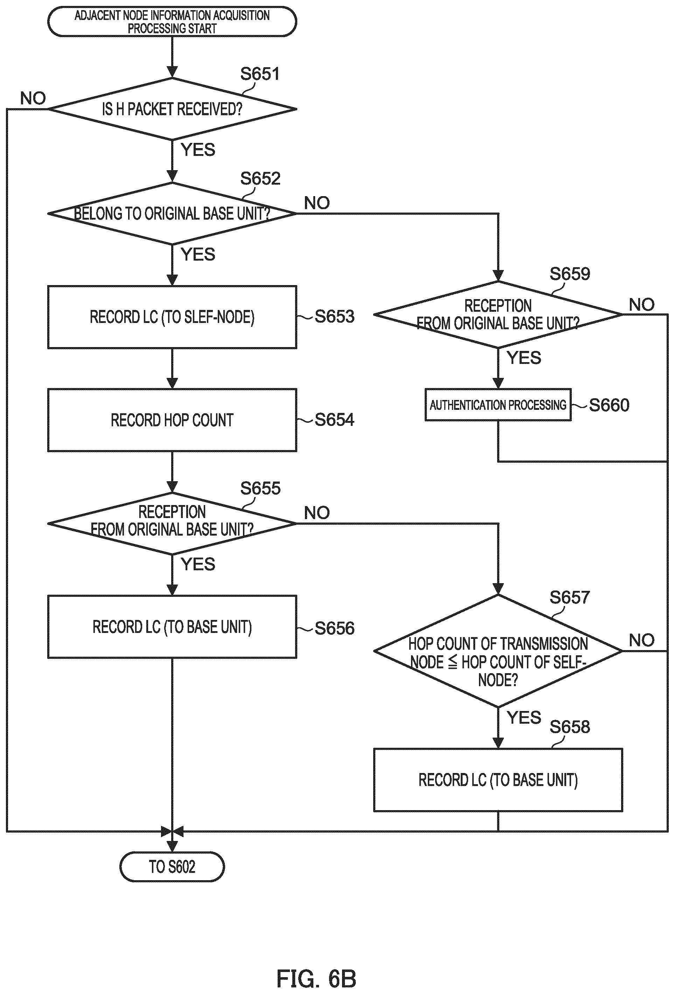

Next, an example of the adjacent node information acquisition processing in step S601 of FIG. 6A will be described with reference to FIG. 6B. In this adjacent node information acquisition processing, the values shown in the table in FIG. 5B are acquired.

In step S651, slave unit 20 (packet analyzer 301) determines whether the H packet has been received.

In a case where the H packet is not received (step S651; NO), the flow proceeds to step S602.

In a case where the H packet is received (step S651; YES), slave unit 20 (packet analyzer 301 or topology manager 304) determines, based on the received H packet, whether slave unit 20 belongs to original base unit M 10 (that is, whether original base unit M 10 is in a state in which it is capable of communication or a state in which it is incapable of communication) in step S652.

In a case where slave unit 20 belongs to original base unit M 10 (step S652; YES), slave unit 20 (topology manager 304) records the LC between the self-node and the transmitter node of the H packet (referred to as the transmission node) as adjacent node information based on the received H packet (see the fourth column from the left in adjacent node information 500B in FIG. 5B) in step S653.

In step S654, slave unit 20 (topology manager 304) records the hop count of the transmission node as adjacent node information based on the received H packet (see the sixth column from the left in adjacent node information 500B in FIG. 5B).

In step S655, slave unit 20 (packet analyzer 301 or topology manager 304) determines, based on the received H packet, whether the H packet was received from original base unit M 10 (whether the transmission node is original base unit M 10).

In a case where the H packet is received from original base unit M 10 (step S655; YES), in step S656, slave unit 20 (topology manager 304) records the LC between original base unit M 10 and the self-node as self-node information and adjacent node information based on the received H packet (see the third column from the left of self-node information 500A and the fourth column from the left of adjacent node information 500B in FIG. 5B). Then, the flow proceeds to step S602.

In a case where the H packet is not received from original base unit M 10 (step S655; NO), slave unit 20 (packet analyzer 301 or topology manager 304) determines whether the hop count of the transmission node is equal to or less than the hop count of the self-node based on the received H packet in step S657.

In a case where the hop count of the transmission node is not equal to or less than the hop count of the self-node (step S657; NO), the flow proceeds to step S602.

In a case where the hop count of the transmission node is equal to or less than the hop count of the self-node (step S657; YES), slave unit 20 (topology manager 304) records the LC between original base unit M 10 and the transmission node (adjacent node) as adjacent node information based on the received H packet (see the fifth column from the left in adjacent node information 500B in FIG. 5B) in step S658. Then, the flow proceeds to step S602.

In step S652, when the slave unit does not belong to original base unit M 10 (step S652; NO), slave unit 20 (packet analyzer 301 or topology manager 304) determines whether the H packet has been received from original base unit M 10 (for example, original base unit M 10 that has recovered from a failure) (whether the transmission node is original base unit M 10) in step S659.

In a case where the H packet is received from original base unit M 10 (step S659; YES), slave unit 20 (authentication processor 302) executes the authentication processing with original base unit M 10 (or waits to be authenticated with any base unit) in step S660, and the flow proceeds to step S602.

In a case where the H packet is not received from original base unit M 10 (step S659; NO), the flow proceeds to step S602.

Note that the order of step S653 and step S654 is not limited to that illustrated. For example, step S654 may be executed first, or steps S653 and S654 may be executed in parallel.

Next, an operation performed when another slave unit 20 becomes a proxy base unit in a case where the slave unit is faulty or the like will be described.

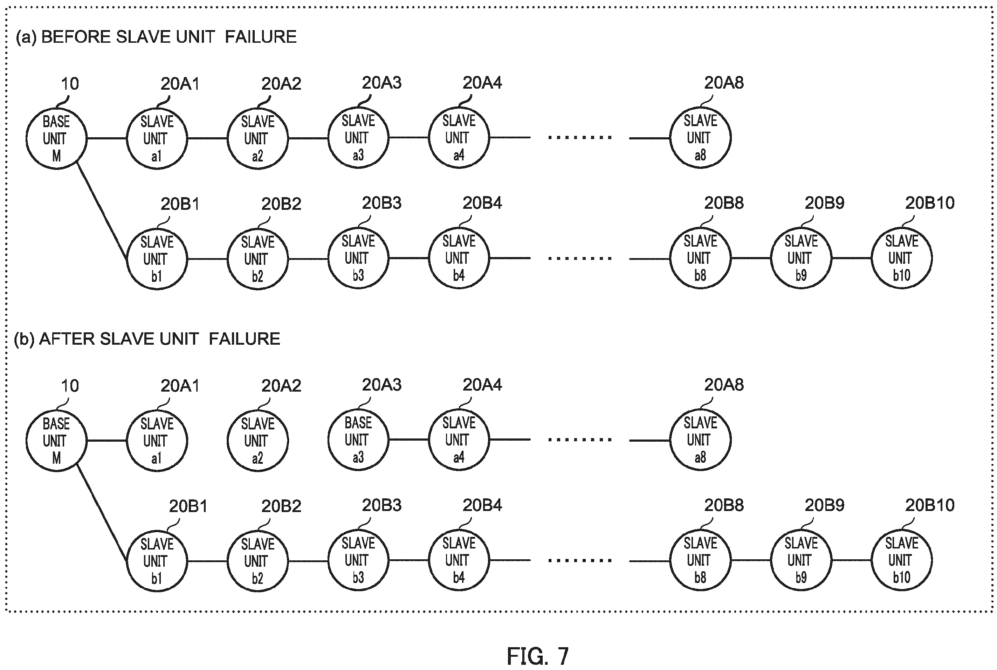

FIG. 7 illustrates an example of the topology before and after a failure of a slave unit according to Embodiment 1.

Before the failure of the slave unit (for example, slave unit a2 20A2), as an example, slave unit a1 20A1 and slave unit b1 20B 1 are connected to the downstream side of base unit M 10 as illustrated in (a) of FIG. 7. Further, slave unit a2 20A2 is connected to the downstream side of slave unit a1 20A1, slave unit a3 20A3 is connected to the downstream side of slave unit a2 20A2, and similarly, slave unit a8 20A8 is connected to the downstream side of slave unit a7 20A7. Further, slave unit b2 20B2 is connected to the downstream side of slave unit b1 20B 1, slave unit b3 20B3 is connected to the downstream side of slave unit b2 20B2, and similarly, slave unit b10 20B 10 is connected to the downstream side of slave unit b9 20B9.

After the failure of slave unit a2 20A2, as an example, slave unit a3 20A3 becomes the proxy base unit as shown in (b) of FIG. 7. In this manner, it is possible to prevent one or more slave units on the downstream side of slave unit 20, which has left from the network due to a fault or the like, from failing to function due to not receiving control (instructions) from the base unit.

In this case, slave unit 20 that becomes the proxy base unit may be any slave unit, and the proxy base unit may be determined as described in the third condition above. For example, each slave unit 20 becomes a proxy base unit in a case where, after not receiving a periodic H packet from base unit M 10 for a predetermined time due to leaving of any slave unit 20 from the network, each slave unit 20 waits during a random time (standby time) based on a random number and transmits a signal indicating that slave unit 20 becomes a proxy base unit to another slave unit 20 (in a case where during the random time waiting (before transmitting the above-described signal), slave unit 20 does not receive, from another slave unit 20, a signal indicating that the other slave unit 20 becomes a proxy base unit).

For example, when original base unit M 10 is in a state in which communication is not possible due to any of slave units 20 leaving the network, and another slave unit 20 is not present in the first hop from base unit M 10, proxy base unit function controller 306 of another slave unit 20 determines the standby time. If no signal indicating that another slave unit 20 will become the proxy base unit is received from the other slave unit 20 during the standby time, proxy base unit function controller 306 determines that the self-node will become the proxy base unit.

Note that, when original base unit M 10 has left the network and another slave unit 20 has already become the proxy base unit, the same operation may be performed even when slave unit 20 leaves the network (for example, when slave unit 20 is waiting to be authenticated in step S609 after step S603 in FIG. 6A). Accordingly, in the state illustrated in (b) of FIG. 4A, for example, when slave unit a3 20A3 leaves the network, for example, slave unit a4 20A4 or slave unit a5 20A5 or the like may become a further proxy base unit.

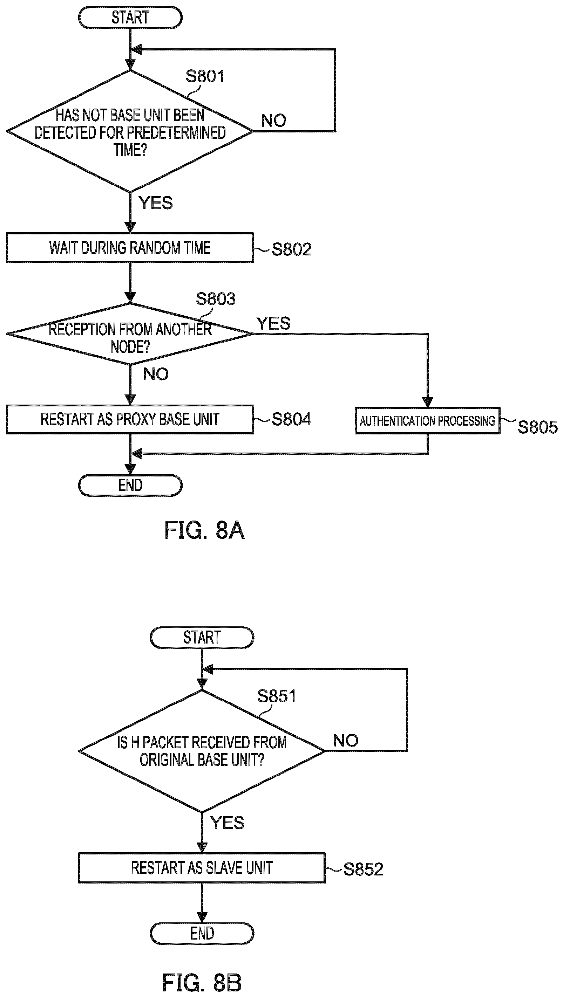

FIG. 8A is a flowchart illustrating an example of a process in which another slave unit 20 becomes a proxy base unit when slave unit 20 leaves from the network according to Embodiment 1. Note that this another slave unit 20 is waiting to be authenticated with any base unit, and is assumed to be present on the downstream side of slave unit 20 that has left the network.

In step S801, slave unit 20 (packet analyzer 301) determines whether the base unit has not been detected for a predetermined time based on whether an H packet with the base unit as the transmission source has not been received for a predetermined time.

In a case where the base unit has not been detected yet (step S801; NO), the flow returns to step S801.

In a case where the base unit is not detected within the predetermined time (step S801; YES), slave unit 20 waits during a random time in step S802.

Next, in step S803, slave unit 20 (packet analyzer 301) determines whether a signal (H packet) indicating that slave unit 20 will become a proxy base unit has been received from another node.

In a case where the H packet is received from another node (step S803; YES), slave unit 20 (authentication processor 302) executes the authentication processing with the proxy base unit (or waits to be authenticated with any base unit) in step S805, and the flow ends.

In a case where the H packet is not received from another node (step S803; NO), in step S804, slave unit 20 restarts as a proxy base unit, and the flow ends.

FIG. 8B is a flowchart illustrating an example of a process in which the proxy base unit becomes a slave unit again according to Embodiment 1.

In step S851, the proxy base unit (packet analyzer 301) determines whether the H packet has been received from original base unit M 10.

In a case where original base unit M 10 has not received the H packet (step S851; NO), the flow returns to step S851.

In a case where the proxy base unit receives the H packet from original base unit M 10 (step S851; YES), the proxy base unit restarts as a slave unit in step S852, and the flow ends.

### <Effect in Embodiment 1>

In the present embodiment, slave unit 20 is a communication apparatus in communication system 1 in which multi-hop communication is performed. Packet analyzer 301 of slave unit 20 detects that base unit M 10 in communication system 1 is in a state in which communication is not possible (has left the network). In a case where base unit M 10 is in a state in which communication is not possible, proxy base unit function controller 306 of slave unit 20 determines whether the self-node becomes a proxy base unit based on the position of the self-node in the relay route (topology) of communication system 1 (whether the self-node is present in the first hop from base unit M 10). According to the present embodiment, slave unit 20 which was originally present in the first hop becomes the proxy base unit, and therefore all nodes can join the new network without being constrained by the maximum hop count. Thus, it is possible to appropriately reconstruct the communication network when the base unit leaves the communication network.

### (Embodiment 2)

In Embodiment 2, when the base unit leaves the network, a slave unit that satisfies a predetermined condition is determined as a proxy base unit candidate by the base unit or the slave unit, and any slave unit becomes the proxy base unit from among proxy base unit candidates, instead of any of the slave units that were present in the first hop becoming the proxy base unit. Here, the predetermined condition may be that, when the slave unit becomes the proxy base unit, the relay to another slave unit (all terminal nodes (nodes at the furthest downstream nodes)) can be performed (another slave unit can be reached) within an allowable maximum hop count (10 hops in the present embodiment) in a relay route (topology) of a communication system in which multi-hop communication is performed after the base unit is brought in a state in which communication is not possible. Note that, in the following, description of the same elements and operations as those in Embodiment 1 will be omitted, and different elements and operations will be described.

### <Node Configuration>

In Embodiment 2, the processing of proxy base unit function controller 306 and the processing related thereto are mainly different from those in Embodiment 1. As described above, in the present embodiment, a slave unit that satisfies a predetermined condition becomes a proxy base unit candidate. Here, when a plurality of slave units that satisfy the predetermined condition are present, a mechanism for determining which slave unit will become the proxy base unit is necessary. Accordingly, proxy base unit function controller 306 according to the present embodiment determines which of the plurality of proxy base unit candidates will become the proxy base unit based on the standby time as described above.

In the first example, proxy base unit function controller 306 may determine the standby time randomly.

In the second example, proxy base unit function controller 306 may determine the standby time according to the hop count (the position of slave unit 20 in the relay route (topology) of communication system 1) from a list of predetermined standby times. For example, the list of predetermined standby times may be {x (seconds), y (seconds), z (seconds)} (x < y < z), and proxy base unit function controller 306 may determine the standby time to be x seconds for the first-hop slave unit, y seconds for the second-hop slave unit, and z seconds for the third-hop slave unit, and so on. Accordingly, the standby time may be determined (set) to be longer as the distance between slave unit 20 and base unit M 10 on the relay route increases.

Further, in the second example, when a plurality of slave units 20 with the same hop count are present, the standby time may be increased or decreased (made greater or smaller) according to the (cumulative) LC from slave unit 20 to base unit M 10, for example. For example, when x1 < x2 < y < z, the LC between base unit M 10 and first-hop slave unit a1 20A1 is 20, and the LC between base unit M 10 and first-hop slave unit b1 20B1 is 25, proxy base unit function controller 306 may determine the standby time to be x1 seconds for first-hop slave unit a1 20A1 and determine the standby time to be x2 seconds for first-hop slave unit b1 20B 1.

Note that, in the first example and the second example, based on the above, proxy base unit function controller 306 of base unit M 10 may determine the standby time for all the slave units, or proxy base unit function controller 306 of the slave unit may determine the standby time for the self-node. The standby time may be zero (seconds).

### <Operation of Communication System>

### [Operation Relating to Proxy Base Unit Function]

Hereinafter, an operation performed when slave unit 20 becomes a proxy base unit in a case where base unit M 10 fails or the like will be described.

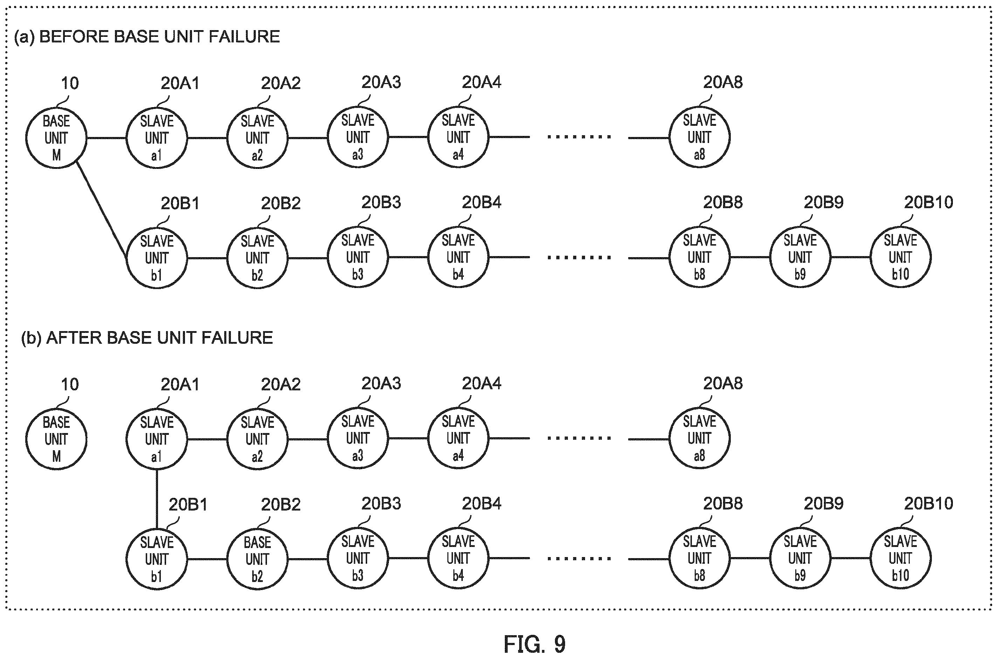

FIG. 9 illustrates an example of the topology before and after a base unit failure according to Embodiment 2.

Before base unit M 10 fails, as an example, as illustrated in (a) of FIG. 9, slave unit a1 20A1 and slave unit b1 20B1 are connected to the downstream side of base unit M 10. Further, slave unit a2 20A2 is connected to the downstream side of slave unit a1 20A1, slave unit a3 20A3 is connected to the downstream side of slave unit a2 20A2, and similarly, slave unit a8 20A8 is connected to the downstream side of slave unit a7 20A7. Further, slave unit b2 20B2 is connected to the downstream side of slave unit b1 20B1, slave unit b3 20B3 is connected to the downstream side of slave unit b2 20B2, and similarly, slave unit b10 20B10 is connected to the downstream side of slave unit b9 20B9.

After base unit M 10 fails, as an example, as illustrated in (b) of FIG. 9, one of the proxy base unit candidates which satisfies a predetermined condition, which is slave unit b2 20B2, becomes the proxy base unit. Then, slave unit b1 20B1 and slave unit b3 20B3 are connected to the downstream side of proxy base unit b2 20B2. Further, slave unit a1 20A1 is connected to a lower position of slave unit b1 20B1. The connection on the downstream side of slave unit a1 20A1 and the connection on the downstream side of slave unit b3 20B3 are not changed. In this manner, all nodes can join a new network without being constrained by the maximum hop count.

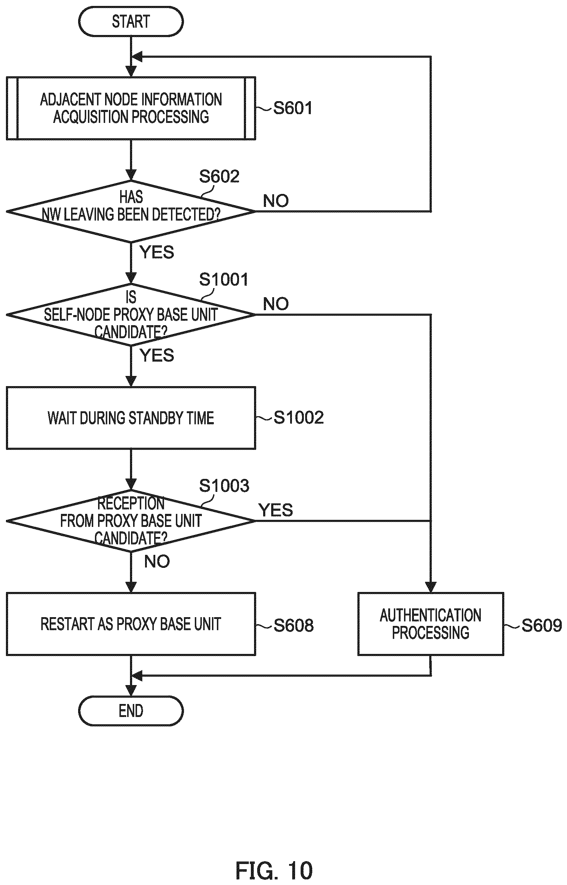

FIG. 10 is a flowchart illustrating an example of a process in which slave unit 20 becomes a proxy base unit according to Embodiment 2. Note that, it is assumed that the authentication between slave units 20 and base unit M 10 has been completed.

In step S601, slave unit 20 executes the adjacent node information acquisition processing. Note that an example of the adjacent node information acquisition processing has already been described with reference to FIG. 6B.

In step S602, slave unit 20 (packet analyzer 301) detects whether or not base unit M 10 has left the network.

In a case where base unit M 10 has not left the network (step S602; NO), the flow returns to step S601.

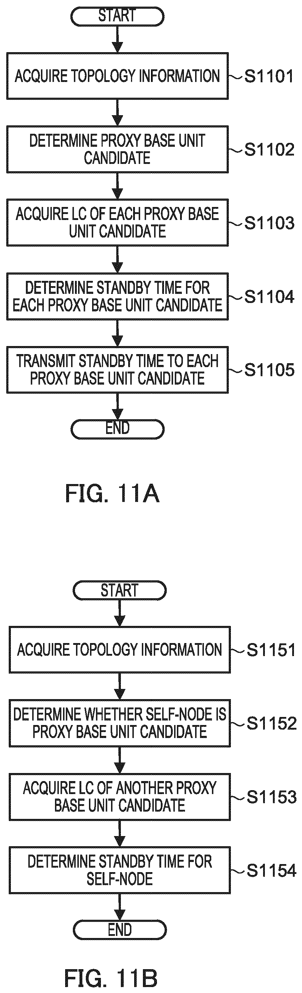

In a case where base unit M 10 leaves the network (step S602; YES), slave unit 20 (proxy base unit function controller 306) determines, in step S1001, whether the self-node is a proxy base unit candidate, based on FIG. 11A (see, for example, step S1102), FIG. 11B (see, for example, step S1152), and the like.

In a case where the self-node is not a proxy base unit candidate (step S1001; NO), slave unit 20 (authentication processor 302) executes the authentication processing with the proxy base unit that another slave unit 20 has become by restart (or the slave unit waits to be authenticated with any base unit) in step S609, and the flow ends.

In a case where the self-node is a proxy base unit candidate (step S1001; YES), slave unit 20 waits during the standby time in step S1002. The determination of the standby time will be described later with reference to FIGS. 11A and 11B.

Next, in step S1003, slave unit 20 (packet analyzer 301) determines whether slave unit receives, from another proxy base unit candidate, a signal (H packet) indicating that the other proxy base unit candidate will become the proxy base unit.

In a case where the H packet is received from another proxy base unit candidate (step S1003; YES), slave unit 20 (authentication processor 302) executes the authentication processing with the proxy base unit (or waits to be authenticated with any base unit) in step S609, and the flow ends.

In a case where the H packet is not received from another proxy base unit candidate (step S1003; NO), slave unit 20 restarts as the proxy base unit in step S608, and the flow ends.

FIG. 11A is a flowchart illustrating an example of a process for determining the standby time according to Embodiment 2. In this example, base unit M 10 executes the processing illustrated in FIG. 11A according to the second example described above.

In step S1101, base unit M 10 (topology manager 304) acquires (or calculates) the topology information.

In step S1102, base unit M 10 (proxy base unit function controller 306) determines a proxy base unit candidate based on the acquired topology information and whether a predetermined condition is satisfied.

In step S1103, base unit M 10 (topology manager 304) acquires (or calculates) the LC of each determined proxy base unit candidate.

In step S1104, base unit M 10 (proxy base unit function controller 306) determines the standby time for each determined proxy base unit candidate based on the acquired LC, as described above.

In step S1105, base unit M 10 (communication apparatus 203) transmits the determined standby time to each proxy base unit candidate.

Note that, in a case of following the first example, after step S1102, base unit M 10 (proxy base unit function controller 306) may randomly determine the standby time for each proxy base unit candidate and transmit the determined standby time to each proxy base unit candidate.

Through the above processing, in step S1002 of FIG. 10, slave unit 20 that satisfies the predetermined condition will wait during the standby time received from base unit M 10.

FIG. 11B is a flowchart illustrating an example of a process for determining the standby time according to Embodiment 2. In this example, slave unit 20 executes the processing illustrated in FIG. 11B in accordance with the second example described above.

In step S1151, slave unit 20 (topology manager 304) acquires the topology information.

In step S1152, slave unit 20 (proxy base unit function controller 306) determines whether the self-node is a proxy base unit candidate based on the acquired topology information.

In step S1153, slave unit 20 (topology manager 304) acquires the LC of another proxy base unit candidate.

In step S1154, slave unit 20 (proxy base unit function controller 306) determines the standby time of the self-node based on the LC of the self-node and the LC of another proxy base unit candidate. Note that a list of predetermined standby times is assumed to be indicated to each slave unit 20 from, for example, base unit M 10.

Note that, in the case of following the first example, after step S1152, slave unit 20 (proxy base unit function controller 306) may randomly determine the standby time of the self-node.

By the above processing, in step S1002 in FIG. 10, slave unit 20 that satisfies the predetermined condition will wait during the standby time determined by the self-node.

### <Effect in Embodiment 2>

In the present embodiment, slave unit 20 is a communication apparatus in communication system 1 in which multi-hop communication is performed. Packet analyzer 301 of slave unit 20 detects that base unit M 10 in communication system 1 is in a state in which communication is not possible (has left the network). In a case where base unit M 10 is in a state in which communication is not possible, proxy base unit function controller 306 of slave unit 20 determines whether the self-node becomes a proxy base unit based on the position of the self-node in the relay route (topology) of communication system 1. More specifically, when slave unit 20 becomes a proxy base unit, proxy base unit function controller 306 of slave unit 20 determines whether the self-node becomes the proxy base unit based on whether the position of slave unit 20 is a position allowing a relay from slave unit 20 to another slave unit 20 located at the furthest downstream position from slave unit 20 within the allowable maximum hop count in a relay route of a communication system in which multi-hop communication is performed after base unit M 10 is brought in a state in which communication is not possible. According to the present embodiment, slave unit 20, which is present at the above position, becomes the proxy base unit, and therefore all nodes can join a new network without being constrained by the maximum hop count. Thus, it is possible to appropriately reconstruct the communication network when the base unit leaves the communication network.

Note that, in Embodiments 1 and 2 described above, each slave unit 20 can store the identification information of original base unit M 10 even when original base unit M 10 leaves the network. This allows the system to return to the original topology (or the LC is recalculated and the topology is changed) when original base unit M 10 recovers from a failure and becomes capable of communication.

Further, in Embodiments 1 and 2 described above, the functional sections of CPU 201 may be integrated with other functional sections as appropriate, or may be divided into two or more sub-functional sections.

Further, in Embodiments 1 and 2 described above, the order of the steps illustrated in the flowcharts and the like is not limited to the order illustrated.

In Embodiments 1 and 2 described above, when the proxy base unit leaves the network due to a failure or the like, a further proxy base unit may be determined in the same manner as the determination of the proxy base unit described above. Accordingly, the "(original) base unit M 10" described above may be appropriately read as "proxy base unit," and the "proxy base unit" described above may be appropriately read as "further proxy base unit. "

In Embodiments 1 and 2 described above, the slave unit that can become a proxy base unit when located in the first hop or when a predetermined condition is satisfied may be all slave units or may be limited (may be some of the slave units). For example, a node that can connect to the Internet is an example of a slave unit that can become a proxy base unit when the node is located at the first hop or when a predetermined condition is satisfied. For example, depending on whether the self-node can be connected to the Internet, each node may include, in an H packet, information (for example, a flag) indicating that the self-node can be (or may be) a proxy base unit in such a case, and exchange the information between nodes, thereby indicating whether the self-node can be (or may be) a proxy base unit.

### <Summary of Embodiments>

A communication apparatus according to one exemplary embodiment of the present disclosure is a communication apparatus in a communication system in which multi-hop communication is performed, and includes: a detector that detects that a base unit in the communication system is in a state in which communication is not possible; and a determiner that determines whether the communication apparatus becomes a proxy base unit, the determining being performed based on a position of the communication apparatus in a relay route in the communication system when the base unit is in the state in which communication is not possible.

**In** the present communication apparatus, when the base unit is in the state in which communication is not possible; when the position of the communication apparatus is at a first hop from the base unit; and when another communication apparatus in the communication system is present at the first hop from the base unit, the determiner determines, based on a first communication quality between the base unit and the communication apparatus and a second communication quality between the base unit and the other communication apparatus, whether the communication apparatus becomes the proxy base unit.

In the present communication apparatus, when the base unit is in the state in which communication is not possible; when the position of the communication apparatus is at the first hop from the base unit; the other communication apparatus is present at the first hop from the base unit; and when the first communication quality is the same as the second communication quality, the determiner determines a standby time, and when a signal indicating that the other communication apparatus becomes a proxy base unit is not received from the other communication apparatus while the standby time is waited through, the determiner determines that the communication apparatus becomes the proxy base unit.

In the present communication apparatus, when the base unit is in the state in which communication is not possible; when the position of the communication apparatus is a position which, in a case where the communication apparatus becomes the proxy base unit, allows a relay within an allowable maximum hop count from the communication apparatus to a communication apparatus located at a furthest downstream position in a second relay route of a second communication system in which second multi-hop communication after the base unit is brought in the state in which communication is not possible is performed; and when another communication apparatus in the communication system is present at a position which, in a case where the other communication apparatus becomes the proxy base unit, allows a relay within the allowable maximum hop count from the other communication apparatus to a communication apparatus located at a furthest downstream position in a third relay route of a third communication system in which third multi-hop communication after the base unit is brought in the state in which communication is not possible is performed, the determiner determines a standby time, and when a signal indicating that the other communication apparatus becomes a proxy base unit is not received from the other communication apparatus while the standby time is waited through, the determiner determines that the communication apparatus becomes the proxy base unit.

In the present communication apparatus, the determiner determines the standby time randomly.

In the present communication apparatus, the determiner determines the standby time based on the position of the communication apparatus in the relay route.

In the present communication apparatus, when the detector does not receive a periodic signal from the base unit for a predetermined time, the detector detects that the base unit is in the state in which communication is not possible.

In the present communication apparatus, when the base unit is in the state in which communication is not possible and the position of the communication apparatus is not at a first hop from the base unit, the determiner determines a standby time, and when a signal indicating that another communication apparatus in the communication system becomes the proxy base unit is not received from the other communication apparatus while the standby time is waited through, the determiner determines that the communication apparatus becomes the proxy base unit.

A communication control method according to one exemplary embodiment of the present disclosure is performed by a communication apparatus in a communication system in which multi-hop communication is performed, and includes: detecting that a base unit in the communication system is in a state in which communication is not possible; and determining whether the communication apparatus becomes a proxy base unit, the determining being based on a position of the communication apparatus in a relay route in the communication system when the base unit is in the state in which communication is not possible.

A communication system according to one exemplary embodiment of the present disclosure is a communication system in which multi-hop communication is performed, in which: a proxy base unit candidate is determined from among slave units based on a relay route in the communication system, the slave units constituting the communication system; a proxy base unit is determined from among a plurality of the proxy base unit candidates when a base unit in the communication system is in a state in which communication is not possible; and when the proxy base unit candidate becomes the proxy base unit, the proxy base unit candidate is capable of performing a relay to the slave units excluding the proxy base unit candidate within an allowable maximum hop count in a second relay route of a second communication system in which second multi-hop communication after the base unit is brought in the state in which communication is not possible is performed.

In the description of the embodiment described above, the term, such as "part" or "portion" or the term ending with a suffix, such as "-er" "-or" or "-ar" may be replaced with another term, such as "circuit (circuitry)," "device," "unit," or "module."

Although the embodiments have been described above with reference to the drawings, the present disclosure is not limited to these examples. Obviously, a person skilled in the art would arrive at variations and modifications within a scope described in claims. It is understood that these variations and modifications are within the technical scope of the present disclosure. Moreover, any combination of features of the above-mentioned embodiments may be made without departing from the spirit of the disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

The disclosure of Japanese Patent Application No. 2022-156638, filed on September 29, 2022, including the specification, drawings and abstract, is incorporated herein by reference in its entirety.

### Industrial Applicability

One exemplary embodiment of the present disclosure is useful for a multi-hop communication system.

### Reference Signs List

1 Communication system
10 Base unit M
20 Slave unit
100 Node
201 CPU
202 Storage apparatus
203 Communication apparatus
204 Equipment interface apparatus
301 Packet analyzer
302 Authentication processor
303 Link cost calculator
304 Topology manager
305 Packet generator
306 Proxy base unit function controller
500A Self-node information
500B Adjacent node information

## Claims

1. A communication apparatus in a communication system in which multi-hop communication is performed, the communication apparatus comprising:
a detector that detects that a base unit in the communication system is in a state in which communication is not possible; and
a determiner that determines whether the communication apparatus becomes a proxy base unit, the determining being performed based on a position of the communication apparatus in a relay route in the communication system when the base unit is in the state in which communication is not possible.

2. The communication apparatus according to claim 1, wherein
when the base unit is in the state in which communication is not possible; when the position of the communication apparatus is at a first hop from the base unit; and when another communication apparatus in the communication system is present at the first hop from the base unit, the determiner determines, based on a first communication quality between the base unit and the communication apparatus and a second communication quality between the base unit and the other communication apparatus, whether the communication apparatus becomes the proxy base unit.

3. The communication apparatus according to claim 2, wherein
when the base unit is in the state in which communication is not possible; when the position of the communication apparatus is at the first hop from the base unit; the other communication apparatus is present at the first hop from the base unit; and when the first communication quality is the same as the second communication quality, the determiner determines a standby time, and when a signal indicating that the other communication apparatus becomes a proxy base unit is not received from the other communication apparatus while the standby time is waited through, the determiner determines that the communication apparatus becomes the proxy base unit.

4. The communication apparatus according to claim 1, wherein
when the base unit is in the state in which communication is not possible; when the position of the communication apparatus is a position which, in a case where the communication apparatus becomes the proxy base unit, allows a relay within an allowable maximum hop count from the communication apparatus to a communication apparatus located at a furthest downstream position in a second relay route of a second communication system in which second multi-hop communication after the base unit is brought in the state in which communication is not possible is performed; and when another communication apparatus in the communication system is present at a position which, in a case where the other communication apparatus becomes the proxy base unit, allows a relay within the allowable maximum hop count from the other communication apparatus to a communication apparatus located at a furthest downstream position in a third relay route of a third communication system in which third multi-hop communication after the base unit is brought in the state in which communication is not possible is performed, the determiner determines a standby time, and when a signal indicating that the other communication apparatus becomes a proxy base unit is not received from the other communication apparatus while the standby time is waited through, the determiner determines that the communication apparatus becomes the proxy base unit.

5. The communication apparatus according to claim 4, wherein
the determiner determines the standby time randomly.

6. The communication apparatus according to claim 4, wherein
the determiner determines the standby time based on the position of the communication apparatus in the relay route.

7. The communication apparatus according to claim 1, wherein
when the detector does not receive a periodic signal from the base unit for a predetermined time, the detector detects that the base unit is in the state in which communication is not possible.

8. The communication apparatus according to claim 1, wherein
when the base unit is in the state in which communication is not possible and the position of the communication apparatus is not at a first hop from the base unit, the determiner determines a standby time, and when a signal indicating that another communication apparatus in the communication system becomes the proxy base unit is not received from the other communication apparatus while the standby time is waited through, the determiner determines that the communication apparatus becomes the proxy base unit.

9. A communication control method performed by a communication apparatus in a communication system in which multi-hop communication is performed, the communication control method comprising:
detecting that a base unit in the communication system is in a state in which communication is not possible; and
determining whether the communication apparatus becomes a proxy base unit, the determining being based on a position of the communication apparatus in a relay route in the communication system when the base unit is in the state in which communication is not possible.

10. A communication system in which multi-hop communication is performed, wherein:
a proxy base unit candidate is determined from among slave units based on a relay route in the communication system, the slave units constituting the communication system;
a proxy base unit is determined from among a plurality of the proxy base unit candidates when a base unit in the communication system is in a state in which communication is not possible; and
when the proxy base unit candidate becomes the proxy base unit, the proxy base unit candidate is capable of performing a relay to the slave units excluding the proxy base unit candidate within an allowable maximum hop count in a second relay route of a second communication system in which second multi-hop communication after the base unit is brought in the state in which communication is not possible is performed.
